# EUROPÄISCHE PATENTSCHRIFT

(11) **EP 2 210 157 B1**
(45) Veröffentlichungstag und Bekanntmachung des Hinweises auf die Patenterteilung: **02.01.2013**
(21) Anmeldenummer: 08849495.0
(22) Anmeldetag: 13.11.2008
(51) Int. Cl.: G05D 7/01

(54) **DURCHFLUSSBEGRENZER**
FLOW RESTRICTOR
LIMITEUR DE DÉBIT

(30) Priorität: 15.11.2007 EP 07405327
(43) Veröffentlichungstag der Anmeldung: 28.07.2010
(73) Patentinhaber: Belimo Holding AG, 8340 Hinwil (CH)
(72) Erfinder: KELLER, Urs, 8340 Hinwil (CH); KÜHNE, Jörg, 8645 Jona (CH); PULLI, Pino, 8712 Stäfa (CH)
(74) Vertreter: Rentsch Partner AG
(86) Internationale Anmeldenummer: PCT/EP2008/065452
(87) Internationale Veröffentlichungsnummer: WO 2009/062997

(56) Entgegenhaltungen:
- DE-A1- 3 308 745
- US-A- 2 899 981
- US-A- 4 884 750

## Beschreibung

### Technisches Gebiet

Die vorliegende Erfindung betrifft einen Durchflussbegrenzer zum Begrenzen eines Volumenstroms durch eine Flüssigkeitsleitung. Die vorliegende Erfindung betrifft insbesondere einen Durchflussbegrenzer, der einen Träger mit Durchlass und eine am Träger angebrachte gebogene Flachformfeder aufweist, wobei die Flachformfeder eingerichtet ist, sich mit steigendem Differenzdruck zunehmend abzuflachen.

### Stand der Technik

Durchflussbegrenzer oder Durchflussmengenregler begrenzen den Volumenstrom durch eine Flüssigkeitsleitung, z.B. eine Rohrleitung, innerhalb eines definierten Arbeitsbereichs des Differenzdrucks und ermöglichen somit einen konstanten Volumenstrom durch die Leitung unabhängig von Druckänderungen in der Leitung.

In der Patentschrift GB 783,323 wird ein Durchflussbegrenzer beschrieben, der eine an einem rund ausgestalteten Träger zentriert befestigte runde Flachformfeder umfasst. Der Träger weist eine Vielzahl von kleinen runden Öffnungen auf, welche auf zwei konzentrischen Ringen symmetrisch um das Zentrum des Trägers angeordnet sind und den maximalen Durchlass bestimmen. Bei zunehmendem Flüssigkeitsdruck in der Rohrleitung wird die Flachformfeder abgeflacht, so dass der offene Bereich zwischen Rohrleitung und Flachformfeder verkleinert wird. Gemäss GB 783,323 ist die Abflachung der Feder nicht linear zum zunehmenden Druck, weil die Abflachung im Zentrum beginnt und nach aussen fortschreitet, und weil die runde Ausgestaltung der Feder bewirkt, dass der nicht abgeflachte Bereich mit zunehmender Abflachung gegen den Randbereich hin schnell abnimmt. Im Durchflussbegrenzer nach GB 783,323 ist die gesamte Durchlassöffnung durch die ringförmig angeordneten Durchbrechungen limitiert, welche überdies durch ihre geringe Grösse ein erhöhtes Verschmutzungs- und Verstopfungsrisiko aufweisen. Überdies besteht eine erhöhte Schwingungsneigung, wenn beim zunehmenden Abflachen der Flachformfeder die einzelnen Löcher individuell verschlossen werden und dadurch der Gesamtdurchlass stufenweise verkleinert wird.

Die US-A-4,884,750 offenbart einen Durchflussbegrenzer zum Begrenzen eines Volumenstroms durch eine Flüssigkeitsleitung, welche einen Träger mit Durchlass und eine am Träger angebrachte gebogene Feder aufweist, welche eingerichtet ist, sich mit steigendem Differenzdruck (Δp) zunehmend abzuflachen. Die verschiedenen Formen der Federn haben entweder den Nachteil des nicht ausreichenden Volumenstroms oder beginnen bei zunehmendem Verschluss des Durchlasses zu schwingen.

### Darstellung der Erfindung

Es ist eine Aufgabe der vorliegenden Erfindung einen Durchflussbegrenzer zum Begrenzen eines Volumenstroms durch eine Flüssigkeitsleitung vorzuschlagen, welcher mindestens gewisse Nachteile des Stands der Technik nicht aufweist. Es ist insbesondere eine Aufgabe der vorliegenden Erfindung einen Durchflussbegrenzer vorzuschlagen, welcher gegenüber dem Stand der Technik ein kleineres Verschmutzungsrisiko und eine geringere Schwingungsneigung aufweist.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Der Durchflussbegrenzer zum Begrenzen eines Volumenstroms durch eine Flüssigkeitsleitung umfasst einen Träger mit Durchlass (Durchlassöffnung) und eine am Träger angebrachte gebogene Flachformfeder, welche eingerichtet ist, sich mit steigendem Differenzdruck zunehmend abzuflachen. Dabei umfasst der Durchlass mindestens zwei nebeneinander liegende Öffnungen und der Träger umfasst einen Steg, welcher die nebeneinander liegenden Öffnungen voneinander trennt. Die Federzunge ist dann so angeordnet, dass sie beim steigenden Differenzdruck zunehmend auf dem Steg aufliegt und die Öffnungen kontinuierlich reduziert, d.h. zunehmend zudeckt, wobei die Öffnungen in definierten Restbereichen offen bleiben.

Die oben genannten Ziele werden durch die vorliegende Erfindung insbesondere dadurch erreicht, dass die Flachformfeder mindestens eine Federzunge und der Durchlass mindestens zwei Öffnungen aufweisen, wobei die Federzunge und die Öffnungen jeweils entlang einer Längsrichtung eine im wesentlichen gleiche Ausdehnung aufweisen, und dass die Federzunge so ausgestaltet und über den Öffnungen angeordnet ist, dass sie sich mit steigendem Differenzdruck zunehmend an den Träger anlegt und dabei die Öffnungen kontinuierlich verkleinert und den Durchlass innerhalb eines definierten Druckbereichs kontinuierlich reduziert. Durch die der Grösse der Federzunge entsprechende Dimensionierung der Öffnungen kann gegenüber dem Stand der Technik bei vergleichbarer Grösse des Durchflussbegrenzers ein insgesamt grösserer Durchlass und ein reduziertes Verschmutzungsrisiko erreicht werden. Mit anderen Worten, bei gleichem Gesamtdurchlass kann der Durchflussbegrenzer kompakter und weniger schmutzanfällig ausgeführt werden. Durch das mit steigendem Differenzdruck zunehmende Anlegen der Flachformfeder am Träger wird überdies eine nichtlineare Zunahme des Federwiderstands bei steigendem Druck erzielt, wobei jedoch durch die damit verbundene kontinuierliche Durchlassverkleinerung eine gegenüber dem Stand der Technik reduzierte Schwingungsneigung erreicht wird.

In einer Ausführungsvariante ist die Flachformfeder an einem äusseren Randbereich des Trägers befestigt, und die mindestens zwei Öffnungen erstrecken sich vom äusseren Randbereich, wo die Flachformfeder befestigt ist, bis zum gegenüberliegenden äusseren Randbereich des Trägers.

In einer weiteren Ausführungsvariante umfasst der Durchlass mehrere rotationssymmetrisch angeordnete Öffnungen, und die Flachformfeder umfasst mehrere rotationssymmetrisch angeordnete Federzungen, welche jeweils so angeordnet sind, dass sie beim steigenden Differenzdruck zunehmend auf dem Träger aufliegen und die Öffnungen kontinuierlich reduzieren, d.h. zunehmend zudecken. In verschiedenen Ausführungsvarianten sind die Federzungen an einem äusseren Randbereich des Trägers oder im Zentrum des Trägers befestigt.

In einer Ausführungsvariante ist die Federzunge so über den Öffnungen angeordnet, dass sie beim steigenden Differenzdruck zunehmend auf die Öffnungen umrandenden Seitenbereichen aufliegt und die Öffnungen kontinuierlich reduziert, d.h. zunehmend zudeckt, wobei die Öffnungen in einem definierten Restbereich offen bleiben.

In einer Ausführungsvariante ist der Träger als runde Scheibe ausgestaltet, welche am äusseren Randbereich einen aufgestellten Kragen zum Einsetzen in eine Rohrleitung umfasst, z.B. in ein Verbindungsstück zwischen zwei Rohrleitungen oder in ein Ventil, z.B. einen Kugelhahn oder ein Hubventil.

In einer Ausführungsvariante ist ein Teil des Kragens auf die Scheibe zurückgebogen und klemmt die Flachformfeder an den Träger.

Neben dem Durchflussbegrenzer bezieht sich die vorliegende Erfindung zudem auf ein Verfahren zum Begrenzen eines Volumenstroms durch eine Flüssigkeitsleitung.

### Kurze Beschreibung der Zeichnungen

Nachfolgend wird eine Ausführung der vorliegenden Erfindung anhand eines Beispieles beschrieben. Das Beispiel der Ausführung wird durch die folgenden beigelegten Figuren illustriert:
Figur 1 a zeigt eine Ansicht eines Durchflussbegrenzers mit einer als Federzunge ausgestalteten Flachformfeder, die über zwei durch einen Steg voneinander getrennte Öffnungen angebracht ist.
Figur 1b zeigt einen Querschnitt des Durchflussbegrenzers der Figur 1a eingebaut in eine Flüssigkeitsleitung.
Figur 1c zeigt eine Aufsicht des Durchflussbegrenzers der Figur 1a eingebaut in eine Flüssigkeitsleitung.
Figur 2a zeigt eine Ansicht eines Durchflussbegrenzers mit einer Flachformfeder, welche mehrere rotationssymmetrisch angeordnete, zentriert befestigte Federzungen aufweist, die über mehreren jeweils durch einen Steg voneinander getrennten Öffnungen angebracht sind.
Figur 2b zeigt einen Querschnitt des Durchflussbegrenzers der Figur 2a eingebaut in eine Flüssigkeitsleitung.
Figur 2c zeigt ein Aufsicht des Durchflussbegrenzers der Figur 2a eingebaut in eine Flüssigkeitsleitung.
Figur 3a zeigt eine Ansicht eines Durchflussbegrenzers mit einer Flachformfeder, welche mehrere rotationssymmetrisch angeordnete, am äusseren Randbereich des Durchflussbegrenzers befestigte Federzungen aufweist, die über mehreren jeweils durch einen Steg voneinander getrennten Öffnungen angebracht sind.
Figur 3b zeigt einen Querschnitt des Durchflussbegrenzers der Figur 3a eingebaut in eine Flüssigkeitsleitung.
Figur 3c zeigt ein Aufsicht des Durchflussbegrenzers der Figur 3a eingebaut in eine Flüssigkeitsleitung.
Figur 4 zeigt einen Querschnitt des Durchflussbegrenzers bei kleiner Druckdifferenz und entsprechend gering ausgelenkter Federzunge, sowie eine Kurve, die die nichtlineare Abhängigkeit von Auslenkung und Federkraft illustriert.
Figur 5 zeigt einen Querschnitt des Durchflussbegrenzers bei grosser Druckdifferenz und entsprechend stark ausgelenkter Federzunge, sowie eine Kurve, die die nichtlineare Abhängigkeit von Auslenkung und Federkraft illustriert.
Figur 6 illustriert schematisch den Mengenverlauf des Volumenstroms durch den Durchflussbegrenzer.
Figur 7 zeigt einen Querschnitt durch ein Hubventil mit eingebautem Durchflussbegrenzer in der Flüssigkeitszuführleitung.
Figur 8 zeigt einen Querschnitt durch einen Kugelhahn mit eingebautem Durchflussbegrenzer in der Flüssigkeitszuführleitung.
Figur 9a zeigt eine Ansicht eines Durchflussbegrenzers mit einer Flachformfeder, welche zwei an einem quer über den Durchflussbegrenzer zwischen den äusseren Randbereichen laufenden Befestigungssteg befestigte Federzungen aufweist, die über jeweils zwei durch einen Steg voneinander getrennten Öffnungen angebracht sind.
Figur 9b zeigt eine andere Ansicht des Durchflussbegrenzers der Figur 9a.
Figur 9c zeigt einen Querschnitt des Durchflussbegrenzers der Figur 9a eingebaut in eine Flüssigkeitsleitung.
Figur 9d zeigt ein Aufsicht des Durchflussbegrenzers der Figur 9a eingebaut in eine Flüssigkeitsleitung.
Figur 10 zeigt eine Aufsicht eines Durchflussbegrenzers mit einer Flachformfeder, welche vier rotationssymmetrisch angeordnete, am Zentrum des Durchflussbegrenzers befestigte Federzungen aufweist, die jeweils über einen zugeordneten Steg angebracht sind, der zwei jeweils einer Federzunge zugeordnete Öffnungen voneinander trennt.
Figur 11 zeigt eine Aufsicht eines weiteren Durchflussbegrenzers mit einer Flachformfeder nach Fig. 9, deren zwei Federzungen jeweils über zwei zugeordnete Stege angebracht sind, der den Durchlass in drei jeweils einer Federzunge zugeordnete Öffnungen trennt.

### Wege zur Ausführung der Erfindung

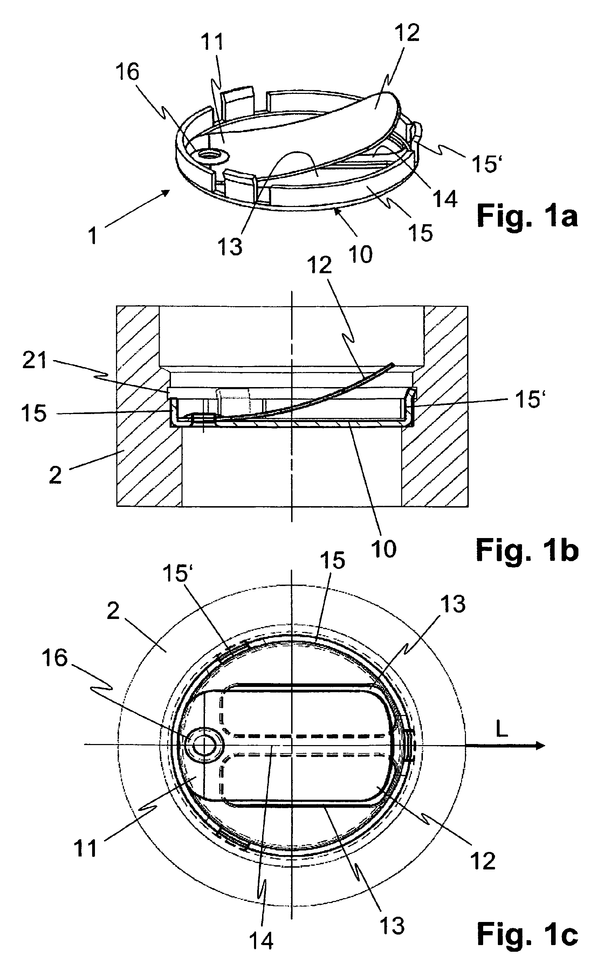

In den Figuren 1a, 2a, 3a, 4, 5, 7, 8, 9a, 10 und 11 bezeichnet das Bezugszeichen 1 einen Durchflussbegrenzer, der auch als Durchflussmengenregler bezeichnet wird und den Volumenstrom durch eine Flüssigkeitsleitung 2 innerhalb eines definierten Arbeitsbereichs [Δpₘᵢₙ, Δpₘₐₓ] des Differenzdrucks Δp begrenzt. Ein druckunabhängiger Volumenstrom V wird erreicht indem der Durchlass des Durchflussbegrenzers 1, d.h. der Durchflussquerschnitt oder die Durchflussfläche, abhängig von der aus dem Differenzdruck Δp erzeugten Kraft verringert wird. Für diesen Zweck umfasst der Durchflussbegrenzer 1 eine mit einem definierten Radius (in der Grössenordnung der Flüssigkeitsleitung 2, z.B. in der Grössenordnung des Rohrdurchmessers) gebogene Flachformfeder 11, welche an einem Träger 10 des Durchflussbegrenzers 1 befestigt ist und so über den Durchlassöffnungen 13, 18, 23 des Durchflussbegrenzers 1 angeordnet ist, dass sie die variable Öffnungsfläche, also den Durchlass des Durchflussbegrenzers 1, mit zunehmendem Druck Δp zunehmend zudeckt und verschliesst. Dabei legt sich die Flachformfeder 11 zunehmend an den Träger 10 an, beispielsweise auf einem Steg 14, 24 und/oder auf Seitenrändern der Öffnungen 18, wodurch die Flachformfeder 11 zunehmend härter wird. Die Flachformfeder 11 wird härter, weil ihre wirksame Länge durch das zunehmende Aufliegen am Träger 10 reduziert wird. So wird der Durchlass und damit der Durchfluss auch bei höherem Differenzdruck Δp gezielt geregelt und in einem bestimmten Arbeitsbereich [Δpₘᵢₙ, Δpₘₐₓ] im Wesentlichen konstant gehalten. Die Durchlassöffnungen sind jeweils als Durchbrechungen im Träger 10 ausgeführt.

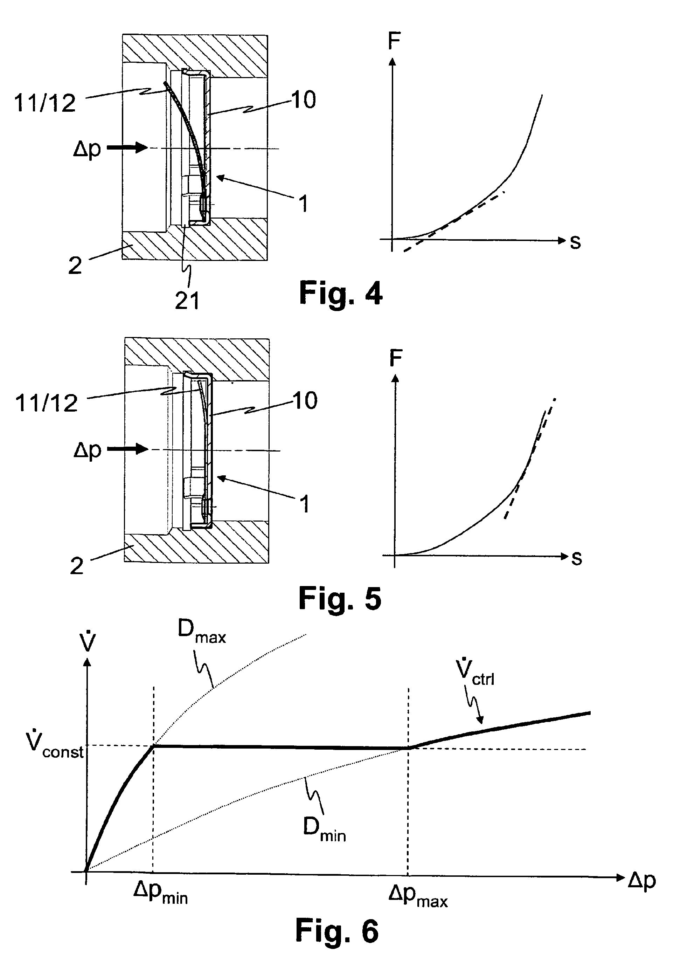

In den Figuren 4 und 5 wird der nichtlineare Zusammenhang zwischen Federkraft F und Auslenkung s dargestellt. Figur 4 zeigt die relativ geringe Auslenkung s der Flachformfeder 11 respektive einer Federzunge 12 der Flachformfeder 11 in einem Bereich mit kleiner Druckdifferenz Δp und entsprechend kleiner Federkraft F. Figur 5 zeigt die vergleichsweise grosse Auslenkung s der Flachformfeder 11 respektive der Federzunge 12 in einem Bereich mit relativ grosser Druckdifferenz Δp und entsprechend grosser und verstärkt zunehmenden Federkraft F.

In der Figur 6 bezeichnet das Bezugszeichen Dₘₐₓ den (Mengen-) Verlauf des Volumenstroms V durch den Durchflussbegrenzer 1 abhängig vom Differenzdruck Δp bei maximalem, ungeregeltem Durchlass (vollständig geöffnete Durchlassöffnung). Das Bezugszeichen Dₘᵢₙ bezeichnet den (Mengen-) Verlauf des Volumenstroms V durch den Durchflussbegrenzer 1 abhängig vom Differenzdruck Δp bei minimalem Durchlass, welcher beim vollständigen Anliegen der Flachformfeder 11 respektive der Federzunge 12, 17, 19 offen bleibt (offener Restbereich bei maximal geschlossener Durchlassöffnung). Wie aus der Figur 6 ersichtlich ist, folgt der geregelte (Mengen-) Verlauf des Volumenstroms V̇_{ctrl} der fettausgezogenen Linie, welche im Arbeitsbereich, zwischen dem minimalen Differenzdruck Δpₘᵢₙ und dem maximalen Differenzdruck Δpₘₐₓ, einen im Wesentlichen konstanten Volumenstromwert V̇_{const} annimmt, unterhalb des minimalen Differenzdrucks Δpₘᵢₙ dem Verlauf Dₘₐₓ des Volumenstroms V bei ungeregeltem, maximalem Durchlass folgt, und oberhalb des maximalen Differenzdrucks Δpₘₐₓ dem Verlauf Dₘᵢₙ des Volumenstroms V bei minimalem (d.h. maximal zugedecktem) Durchlass folgt.

Wie in den Figuren 1a, 1b, 1c, 2a, 2b, 2c, 3a, 3b und 3c ersichtlich ist, ist der Träger 10 passend zum Querschnitt der Flüssigkeitsleitung 2 vorzugsweise rund ausgestaltet und weist einen abstehenden Kragen 15 auf. Der Kragen 15 ist am äusseren Randbereich des scheibenförmigen Trägers 10 angebracht und wird beispielsweise durch Druckverformung einstückig mit dem Träger 10 hergestellt. In einer Variante weist der Kragen 15 mehrere Abschnitte 15' auf, die leicht abgespreizt sind und in entsprechende Aufnahmen 21, z.B. eine Nut, in der Wandung der Flüssigkeitsleitung 2 eingreifen und den Durchflussbegrenzer 1 in der Flüssigkeitsleitung 2 axial fixieren.

In einer Ausführungsvariante (nicht dargestellt) ist ein Teil des Kragens 15 auf den Träger 10 zurückgebogen und klemmt die Flachformfeder 11 am Träger 10 fest. Die Flachformfeder 11 kann jedoch auch mittels einer Niete 16 oder durch Verkleben am Träger 10 befestigt sein.

In der bevorzugten Ausführungsvariante gemäss den Figuren 1a, 1 b und 1c umfasst die Flachformfeder 11 eine Federzunge 12 und der Träger 10 weist einen Durchlass mit zwei nebeneinander liegenden Öffnungen 13 auf. Wie aus der Figur 1c ersichtlich ist, weisen die beiden Öffnungen 13 und die Federzunge 12 in der Längsrichtung L eine im Wesentlichen gleiche Ausdehnung (Länge) auf. Der Träger 10 weist einen Steg 14 auf, welcher die beiden Öffnungen 13 voneinander trennt. Die Flachformfeder 11 ist am äusseren Randbereich des runden Trägers 10 angebracht. Die beiden Öffnungen 13 sind rechteck- oder trapezförmig und erstrecken sich vom äusseren Randbereich, wo die Flachformfeder 11 befestigt ist, bis zum gegenüberliegenden äusseren Randbereich des Trägers 10. Die Flachformfeder 11 respektive die Federzunge 12 ist entlang der Längsachse des Stegs 14, entlang (parallel zu) den Öffnungen 13 ausgerichtet und so über den Öffnungen 13 angeordnet, dass sie beim mit steigendem Differenzdruck Δp zunehmenden Anliegen auf dem Steg 14 des Trägers 10 die Öffnungen 13 innerhalb des definierten Arbeitsbereichs [Δpₘᵢₙ, Δpₘₐₓ] kontinuierlich zunehmend zugedeckt und verschliesst, bis beim maximalen Anliegen der Federzunge 12 ein minimaler Durchlass verbleibt. Der minimale Durchlass wird durch offen bleibende Restbereiche in vom Steg 14 abgewandten Randbereichen der Öffnungen 13 gebildet, welche durch die Federzunge 12 nicht zugedeckt werden.

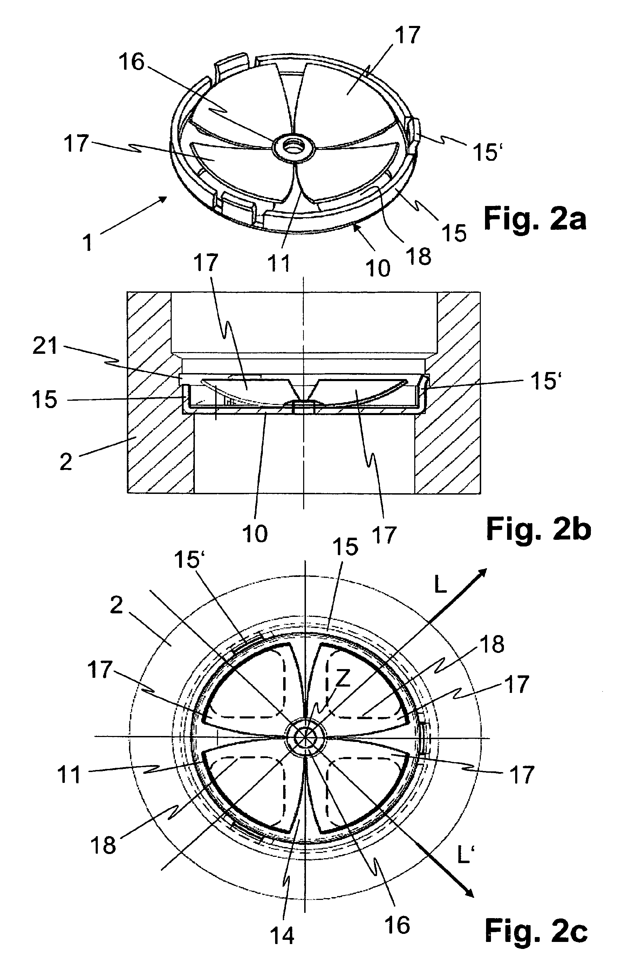

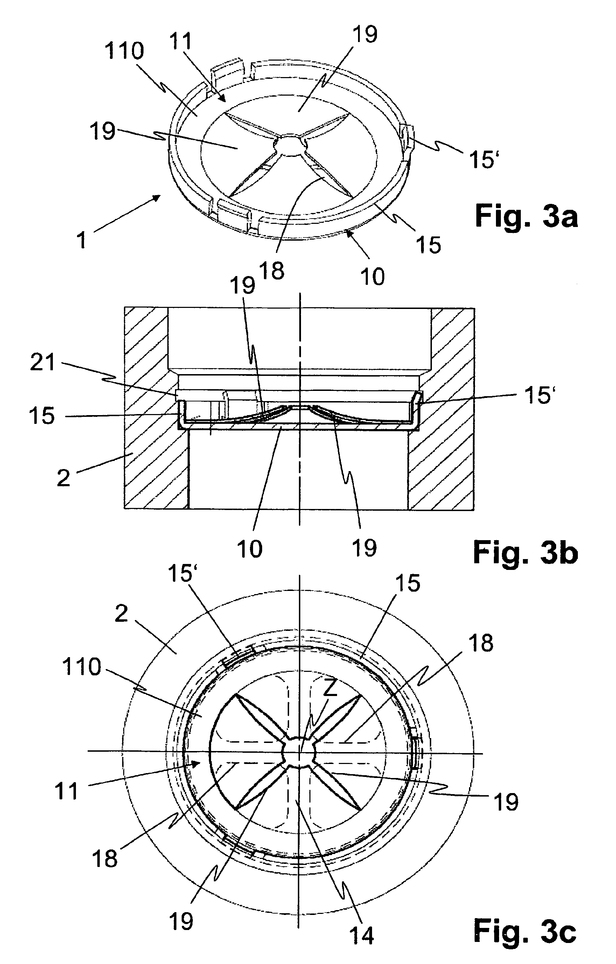

In der Ausführungsvariante gemäss den Figuren 2a, 2b, 2c, 3a, 3b und 3c weist der Träger 10 einen Durchlass mit vier rotationssymmetrisch angeordneten Öffnungen 18 auf, welche jeweils durch einen Steg 14 voneinander getrennt sind. Wie in den Figuren 2c und 3c ersichtlich ist, können die Stege 14 als Speichen eines Rads betrachtet werden, das aus dem runden Träger 10 durch die Öffnungen 18 gebildet wird. Die Öffnungen 18 sind jeweils als ungefähr dreieckförmige Kreissektoren des runden Trägers 10 ausgebildet, welche sich nicht vollständig bis zum Zentrum des Trägers 10 erstrecken. Die Flachformfeder 11 umfasst mehrere rotationssymmetrisch angeordnete Federzungen 17, 19, welche jeweils so angeordnet sind, dass sie beim steigenden Differenzdruck zunehmend auf dem Träger 10 aufliegen und die Öffnungen 18 kontinuierlich reduzieren.

In der Ausführungsvariante gemäss den Figuren 2a, 2b, 2c ist die Flachformfeder 11 im Zentrum Z des Trägers 10 angebracht und die Federzungen 17 sind jeweils einer Öffnung 18 zugeordnet. Wie aus der Figur 2c ersichtlich ist, weisen die Öffnungen 18 und die Federzungen 17 entlang der Längsrichtung L, L' eine im Wesentlichen gleiche Ausdehnung (Länge) auf. Die Federzungen 17 sind jeweils über einer zugeordneten Öffnung 18 so angeordnet, dass sie mit steigendem Differenzdruck Δp jeweils zunehmend auf beiden Stegen 14 aufliegen, die die betreffende Öffnung 18 begrenzen. Somit werden die Öffnungen 18 innerhalb des definierten Arbeitsbereichs [Δpₘᵢₙ. Δpₘₐₓ] kontinuierlich zunehmend zugedeckt und verschlossen, bis beim maximalen Anliegen der Federzunge 17 ein minimaler Durchlass verbleibt. Der minimale Durchlass wird bei den Öffnungen 18 jeweils durch einen offen bleibenden Restbereich in vom Zentrum Z abgewandten Randbereichen der Öffnungen 18 gebildet, welche durch die Federzungen 17 nicht zugedeckt werden.

In der Ausführungsvariante gemäss den Figuren 3a, 3b, 3c weist die Flachformfeder 11 einen äusseren Reifenbereich 110 auf, welcher am Träger 10 angebracht ist. Im Unterschied zu der Ausführungsvariante gemäss den Figuren 2a, 2b, 2c sind die Federzungen 19 somit am äusseren Randbereich des Trägers 10 befestigt.

Wie aus der Figur 3c ersichtlich ist, weisen die Öffnungen 18 und die Federzungen 19 entlang ihrer Längsrichtung, d.h. entlang ihrer jeweiligen Symmetrieachse vom Reifenbereich 110 zum Zentrum Z hin, eine im Wesentlichen gleiche Ausdehnung (Länge) auf. Die Federzungen 19 sind jeweils über einem zugeordneten Steg 14 so angeordnet, dass sie mit steigendem Differenzdruck Δp jeweils zunehmend auf dem betreffenden Steg 14 aufliegen, und die beiden an den Steg 14 angrenzenden Öffnungen 18 zunehmend zudecken. Somit werden die Öffnungen 18 innerhalb des definierten Arbeitsbereichs [Δpₘᵢₙ, Δpₘₐₓ] kontinuierlich zunehmend zugedeckt und verschlossen, bis beim maximalen Anliegen der Federzunge 19 ein minimaler Durchlass verbleibt. Der minimale Durchlass wird bei den Öffnungen 18 jeweils durch einen offen bleibenden Bereich zwischen zwei benachbarten Federzungen 19 entlang der Symmetrieachse der betreffenden Öffnung gebildet, welcher durch die Federzungen 19 nicht zugedeckt wird.

Der Fachmann wird verstehen, dass auch drei oder mehr als vier Öffnungen 18 und entsprechende Federzungen 17, 19 vorgesehen werden können.

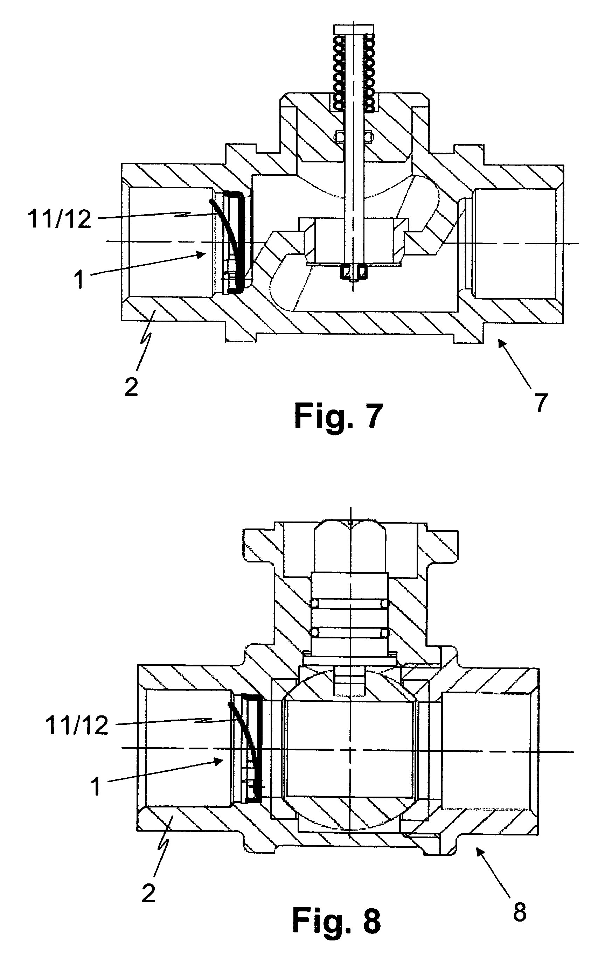

Figur 7 zeigt einen Querschnitt durch ein Hubventil 7 mit entfernbar oder fest eingebautem Durchflussbegrenzer 1 (gemäss einer der beschriebenen Ausführungsvarianten) in der Flüssigkeitszuführleitung 2.

Figur 8 zeigt einen Querschnitt durch einen Kugelhahn 8 mit entfernbar oder fest eingebautem Durchflussbegrenzer 1 (gemäss einer der beschriebenen Ausführungsvarianten) in der Flüssigkeitszuführleitung 2.

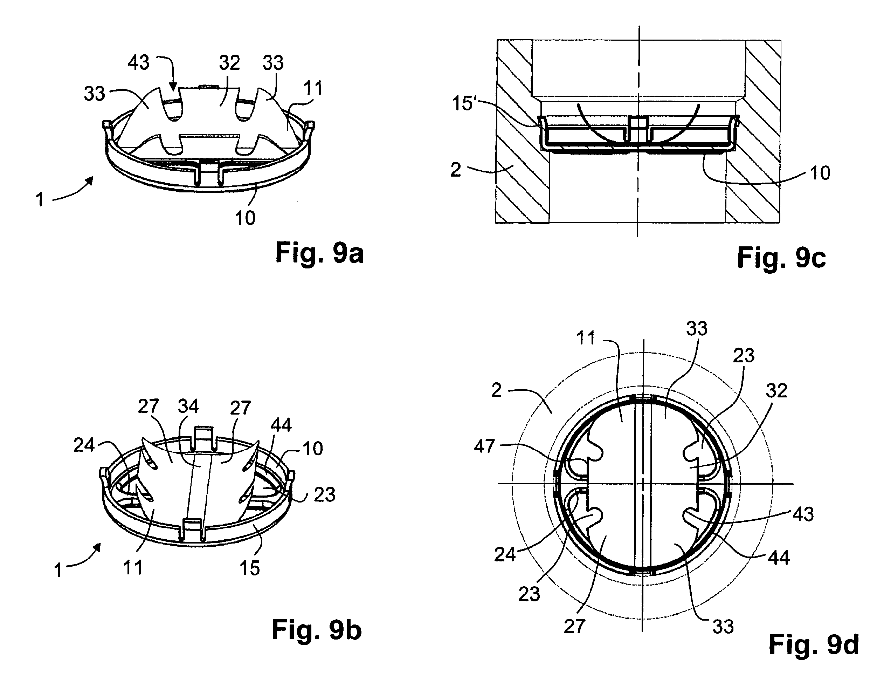

Die Figuren 9a, 9b, 9c und 9d zeigen Ansichten, einen Querschnitt und Aufsichten eines Durchflussbegrenzers 1 mit einer Flachformfeder 11, welche zwei an einem quer über den Durchflussbegrenzer 1 zwischen den äusseren Randbereichen laufenden Befestigungssteg 34 befestigte Federzungen 27 aufweist. Dabei kann die Befestigung der Feder 11 auf dem Steg 34 geklebt, genietet oder entsprechend den oben genannten anderen Befestigungsverfahren ausgestaltet sein. Jeder Teilbereich der Feder 11, also jede Federzunge 27, ist jeweils über zwei durch einen Steg 24 voneinander getrennten Öffnungen 23 angebracht. Die Öffnungen nehmen also ungefähr, abzüglich der Stege 24 und 34 jeweils einen Quadranten des kreisförmigen Durchlasses für den Durchflussbegrenzer 1 ein.

Im Querschnitt der Figur 9c ist ersichtlich, dass die Federzungen 27 in der Ausgangslage, das heisst ohne einen Fluidfluss, einen Tangentenwinkel zwischen 10 und 30 Grad gegenüber der Längsachse der Flüssigkeitsleitung 2 aufweisen. Bei steigendem Fluidfluss vermindert sich diese Krümmung und insbesondere der mittlere Teil 32 der Federzunge 27 legt sich auf den Steg 24 ab, während die seitlichen Teile 33 der Federzungen 27 sich auf den Randbereichen 44 des Trägers ablegen.

Zwischen dem mittleren Teil 32 und den seitlichen Teilen 33 der Federzungen 27 bestehen Ausnehmungen 43, die insbesondere als Ausstanzungen ausgeführt sein können. Diese entsprechen in der Draufsicht eine halben Ellipse oder einem oval gerundeten Schlitz. Wird der Mittelachse einer Federzunge 27, die über dem Steg 24 angeordnet ist, in radialer Richtung der Winkel 0 Grad zugeordnet, so sind diese beiden Ausnehmungen 43 einer Federzunge 27 in einem Winkel zwischen 20 und 45 Grad, insbesondere bei ca. 30 Grad angeordnet.

Die Feder 11 ist, wenn sie abgeplattet wird und nicht die in der Figur 9c dargestellte unter Vorspannung stehende Form hat, keine vollkommene Kreisscheibe, sondern sie ist insbesondere im Bereich des mittleren Teils 32 abgeschnitten. Die Abschnittskante entspricht einer Sehne 47 des Kreises. Diese Sehne 47 kann in den seitlichen Teilen 33 abgerundet in den Kreisrand der Feder 11 übergeben. Somit ergibt sich bei vollkommen auf den Stegen 24 und 34 aufliegender Feder 11 ein zweifacher verbleibender Durchlass. Zum einen ist dies der Bereich der Ausnehmungen 43 und andererseits der durch den jenseits der Sehne 47 verbleibenden Raum der beiden Öffnungen 23. Es ist klar, dass in einem in den Zeichnungen nicht dargestellten Ausführungsbeispiel einmal nur die Ausnehmungen 43 bestehen können und ein andermal nur der durch die Sehnen vorgegebene verbleibende Raum der beiden Öffnungen 23.

Der Kragen 15 weist auch hier mehrere Abschnitte 15' auf, die leicht abgespreizt sind, und den Durchflussbegrenzer 1 in der Flüssigkeitsleitung 2 axial fixieren können.

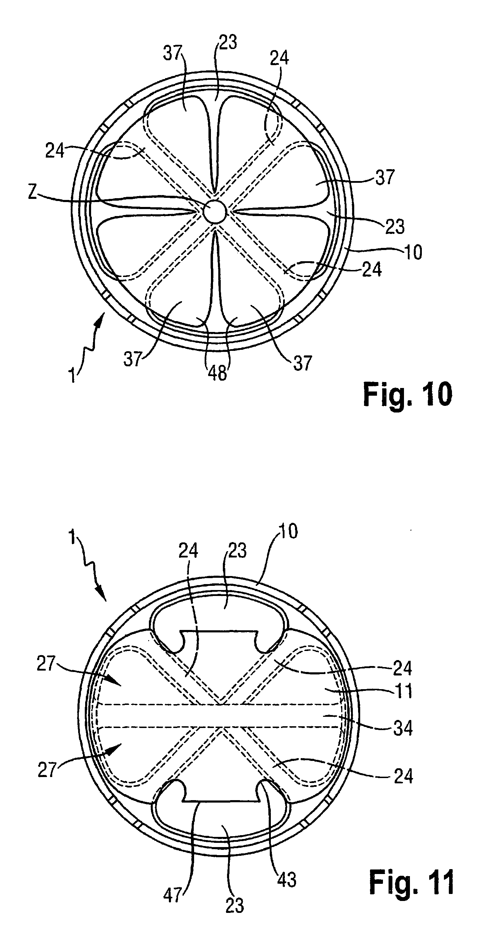

Die Figur 10 zeigt eine Aufsicht eines Durchflussbegrenzers 1 mit einer Flachformfeder 11, welche vier rotationssymmetrisch angeordnete, am Zentrum Z des Durchflussbegrenzers 1 befestigte Federzungen 37 aufweist. Diese Federzungen 37 sind gegenüber dem Ausführungsbeispiel der Figur 2 um 45 Grad rotiert, so dass sie jeweils über einem zugeordneten Steg 24 angebracht sind, der zwei jeweils einer Federzunge 37 zugeordnete Öffnungen 23 voneinander trennt. Andersherum sind jeder Öffnung 23 hier jeweils zwei Federzungen 37 zugeordnet. Die freibleibenden Durchlassbereiche ergeben sich hier aus den Kleeblatt-artigen Zwischenöffnungen zwischen den Federzungen 37. In einem anderen in den Zeichnungen nicht dargestellten Ausführungsbeispiel können die Ecken 48 der Federzungen abgeschnitten sein, um weitergehende Ausnehmungen zu gestalten, oder es können Ausnehmungen entsprechend den ovalen Ausstanzungen gemäss dem Ausführungsbeispiel der Fig. 9 bestehen.

Die Figur 11 schliesslich zeigt eine Aufsicht eines weiteren Durchflussbegrenzers 1 mit einer Flachformfeder 11, abgewandelt gegenüber Fig. 9, deren zwei Federzungen 27 jeweils über zwei zugeordneten Stegen 24 angebracht sind. Die Stege 24 kreuzen sich im Zentrum in einem 90 Grad-Winkel zu einander und in einem 45 Grad Winkel zum Befestigungssteg 34. Der Durchlass ist hier also in drei jeweils einer Federzunge 27 zugeordnete Öffnungen 23 aufgetrennt. Ausnehmungen 43 und Sehnenabschnitt 47 entsprechen denen der Fig. 9, so dass insbesondere im mittleren Abschnitt 32 der verbleibende Durchlassbereich offen bleibt, während sich die seitlichen Federzungenbereiche auf dem Randbereich 44 des Trägers 10 ablegen. Es ist aber auch möglich, dass die Ausnehmungen 43 auch oder nur oder zusätzlich in den seitlichen Bereichen 33 vorgesehen sind.

Die Feder 11 ist vorzugsweise aus einem Federstahl, der vorgebogen ist, insbesondere im Bereich zwischen ungefähr 30 Grad, wie in den Ausführungsbeispielen der Figuren 1, 2 und 3, oder bis zu 80 Grad, wie in den Ausführungsbeispielen der Figuren 9 und 11.Die Breite der Stege 14 und 24 ist so ausgestaltet, dass sie eine sichere mechanische Auflagefläche bildet. Hierfür ist eine Breite von 5 bis 10 %, maximal 20 % des Durchmessers des Durchflussbegrenzers 1 oder der beidseitig überstehenden Breite der Flachformfeder 11 ausreichend.

## Patentansprüche

1. Durchflussbegrenzer (1) zum Begrenzen eines Volumenstroms durch eine Flüssigkeitsleitung (2), umfassend einen Träger (10) mit Durchlass und eine am Träger (10) angebrachte gebogene Flachformfeder (11), welche eingerichtet ist, sich mit steigendem Differenzdruck (Δp) zunehmend abzuflachen, wobei die Flachformfeder (11) mindestens eine Federzunge (12, 17, 19) aufweist, **dadurch gekennzeichnet, dass** der Durchlass mindestens zwei nebeneinander liegende Öffnungen (13, 18) umfasst, wobei die Federzunge (12, 17, 19) und die Öffnungen (13, 18) jeweils entlang einer Längsrichtung eine im Wesentlichen gleiche Ausdehnung aufweisen, dass der Träger (10) mindestens einen Steg (14) umfasst, welcher jeweils zwei nebeneinander liegende Öffnungen (13, 18) voneinander trennt, und dass jede Federzunge (12, 19) so ausgestaltet und über den Öffnungen (13, 18) angeordnet ist, dass sie bei steigendem Differenzdruck (Δp) zunehmend auf dem Steg (14) aufliegt und die Öffnungen (13, 18) kontinuierlich verkleinert, um den Durchlass innerhalb eines definierten Druckbereichs kontinuierlich zu reduzieren, wobei die Öffnungen (18) in definierten Restbereichen offen bleiben.

2. Durchflussbegrenzer (1) nach Anspruch 1, **dadurch gekennzeichnet, dass** die Flachformfeder (11) an einem äusseren Randbereich des Trägers (10) befestigt ist, und dass die mindestens zwei Öffnungen (13, 18) sich vom äusseren Randbereich, wo die Flachformfeder (11) befestigt ist, bis zum gegenüberliegenden äusseren Randbereich des Trägers (10) erstrecken.

3. Durchflussbegrenzer (1) nach Anspruch 1, **dadurch gekennzeichnet, dass** der Durchlass mehrere rotationssymmetrisch angeordnete Öffnungen (18) umfasst, und dass die Flachformfeder (11) mehrere rotationssymmetrisch angeordnete Federzungen (17, 19) umfasst, welche jeweils so angeordnet sind, dass sie beim steigenden Differenzdruck (Δp) zunehmend auf den zugeordneten Stegen (14) aufliegen und die Öffnungen (18) kontinuierlich verkleinern.

4. Durchflussbegrenzer (1) nach Anspruch 3, **dadurch gekennzeichnet, dass** die Federzungen (19) an einem äusseren Randbereich des Trägers (10) befestigt sind.

5. Durchflussbegrenzer (1) nach Anspruch 3, **dadurch gekennzeichnet, dass** die Federzungen (17) im Zentrum (Z) des Trägers (10) befestigt sind.

6. Durchflussbegrenzer (1) nach einem der Ansprüche 1 bis 5, **dadurch gekennzeichnet, dass** die Federzunge (17) so über den Öffnungen (13, 10, 18) angeordnet ist, dass sie bei steigendem Differenzdruck (Δp) auch zunehmend auf die die Öffnungen (13, 18) umrandenden Seitenbereichen aufliegt.

7. Durchflussbegrenzer (1) nach einem der Ansprüche 1 bis 6, **dadurch gekennzeichnet, dass** der Träger (10) als runde Scheibe ausgestaltet ist, welche am äusseren Randbereich einen aufgestellten Kragen (15) zum Einsetzen in eine Rohrleitung umfasst.

8. Durchflussbegrenzer (1) nach Anspruch 7, **dadurch gekennzeichnet, dass** ein Teil des Kragens (15) auf die Scheibe zurückgebogen ist und die Flachformfeder (11) an den Träger (10) klemmt.

9. Verfahren zum Begrenzen eines Volumenstroms durch eine Flüssigkeitsleitung (2), umfassend:
Anbringen einer gebogenen Flachformfeder (11) an einen Träger (10) mit Durchlass, wobei die Flachformfeder (11) eingerichtet ist, sich mit steigendem Differenzdruck (Δp) zunehmend abzuflachen, wobei die Flachformfeder (11) mit mindestens einer Federzunge (12, 17, 19) versehen wird, **dadurch gekennzeichnet,**
**dass** der Durchlass mit mindestens zwei nebeneinander liegenden Öffnungen (13, 18) versehen wird, wobei die Federzunge (12, 17, 19) und die Öffnungen (13, 18) jeweils entlang einer Längsrichtung mit einer im Wesentlichen gleichen Ausdehnung ausgestaltet werden, und
**dass** der Träger (10) mindestens einen Steg (14) umfasst, welcher jeweils zwei nebeneinander liegende Öffnungen (13, 18) voneinander trennt, und dass jede Federzunge (12, 19) so ausgestaltet und über den Öffnungen (13, 18) angeordnet ist, dass sie bei steigendem Differenzdruck (Δp) zunehmend auf dem Steg (14) aufliegt und die Öffnungen (13, 18) kontinuierlich verkleinert, um den Durchlass innerhalb eines definierten Druckbereichs kontinuierlich zu reduzieren, wobei die Öffnungen (18) in definierten Restbereichen offen bleiben.

## Claims

1. Flow restrictor (1) for limiting a volume flow through a liquid line (2), comprising a carrier (10) with a passage and a bent flat form spring (11) which is attached to the carrier (10) and which is designed to be flattened increasingly with a rising differential pressure (Δp), the flat form spring (11) having at least one spring tongue (12, 17, 19), **characterized in that** the passage comprises at least two orifices (13, 18) lying next to one another, the spring tongue (12, 17, 19) and the orifices (13, 18) having an essentially identical extent in each case in a longitudinal direction, **in that** the carrier (10) comprises at least one web (14) which in each case separates two orifices (13, 18) lying next to one another from one another, and **in that** each spring tongue (12, 19) is configured and arranged above the orifices (13, 18) so that, with a rising differential pressure (Δp), it increasingly lies upon the web (14) and continuously reduces the orifices (13, 18), in order to reduce the passage continuously within a defined pressure range, the orifices (18) remaining open in defined remaining regions.

2. Flow restrictor (1) according to Claim 1, **characterized in that** the flat form spring (11) is fastened to an outer marginal region of the carrier (10), and **in that** the at least two orifices (13, 18) extend from the outer marginal region, where the flat form spring (11) is fastened, as far as the opposite outer marginal and region of the carrier (10).

3. Flow restrictor (1) according to Claim 1, **characterized in that** the passage comprises a plurality of rotationally symmetrically arranged orifices (18), and **in that** the flat form spring (11) comprises a plurality of rotationally symmetrically arranged spring tongues (17, 19) which are in each case arranged so that, with a rising differential pressure (Δp), they lie increasingly upon the assigned webs (14) and continuously reduce the orifices (18).

4. Flow restrictor (1) according to Claim 3, **characterized in that** the spring tongues (19) are fastened to an outer marginal region of the carrier (10).

5. Flow restrictor (1) according to Claim 3, **characterized in that** the spring tongues (17) are fastened in the center (Z) of the carrier (10).

6. Flow restrictor (1) according to one of Claims 1 to 5, **characterized in that** the spring tongue (17) is arranged above the orifices (13, 18) so that, with a rising differential pressure (Δp), it also lies increasingly upon the side regions bordering the orifices (13, 18).

7. Flow restrictor (1) according to one of Claims 1 to 6, **characterized in that** the carrier (10) is configured as a round disk which comprises, on the outer marginal region, an erected collar (15) for insertion into a pipe line.

8. Flow restrictor (1) according to Claim 7, **characterized in that** part of the collar (15) is bent back onto the disk and clamps the flat form spring (11) to the carrier (10).

9. Method for limiting a volume flow through a liquid line (2), comprising:
attachment of a bent flat form spring (11) to a carrier (10) with a passage, the flat form spring (11) being designed to be flattened increasingly with a rising differential pressure (Δp), the flat form spring (11) being provided with at least one spring tongue (12, 17, 19), **characterized in that** the passage is provided with at least two orifices (13, 18) lying next to one another, the spring tongue (12, 17, 19) and the orifices (13, 18) being configured with an essentially identical extent in each case in a longitudinal direction, and
**in that** the carrier (10) comprises at least one web (14) which in each case separates two orifices (13, 18) lying next to one another from one another, and **in that** each spring tongue (12, 19) is configured and arranged above the orifices (13, 18) so that, with a rising differential pressure (Δp), it lies increasingly upon the web (14) and continuously reduces the orifices (13, 18), in order to reduce the passage continuously within a defined pressure range, the orifices (18) remaining open in defined remaining regions.

## Revendications

1. Limiteur de débit (1) pour limiter un flux volumique à travers une conduite de liquide (2), comprenant un support (10) avec un passage et un ressort de forme plate (11) monté sur le support (10), lequel est prévu pour s'aplatir de plus en plus au fur et à mesure de l'augmentation de la pression différentielle (Δp), le ressort de forme plate (11) présentant au moins une langue de ressort (12, 17, 19), **caractérisé en ce que** le passage comprend au moins deux ouvertures juxtaposées (13, 18), la langue de ressort (12, 17, 19) et les ouvertures (13, 18) présentant à chaque fois le long d'une direction longitudinale une étendue essentiellement identique, **en ce que** le support (10) comprend au moins une nervure (14) qui sépare l'une de l'autre à chaque fois deux ouvertures juxtaposées (13, 18) et **en ce que** chaque langue de ressort (12, 19) est configurée et disposée au-dessus des ouvertures (13, 18) de telle sorte qu'elle s'applique de plus en plus sur la nervure (14) au fur et à mesure de l'augmentation de la pression différentielle (Δp) et amoindrisse en continu les ouvertures (13, 18), afin de réduire en continu le passage à l'intérieur d'une plage de pression définie, les ouvertures (18) restant ouvertes dans des plages restantes définies.

2. Limiteur de débit (1) selon la revendication 1, **caractérisé en ce que** le ressort de forme plate (11) est fixé au niveau d'une région de bord extérieure du support (10), et **en ce que** les au moins deux ouvertures (13, 18) s'étendent depuis la région de bord extérieure où est fixé le ressort de forme plate (11) jusqu'à la région de bord extérieure opposée du support (10).

3. Limiteur de débit (1) selon la revendication 1, **caractérisé en ce que** le passage comprend plusieurs ouvertures (18) disposées avec une symétrie de révolution, et **en ce que** le ressort de forme plate (11) comprend plusieurs langues de ressort (17, 19) disposées suivant une symétrie de révolution, lesquelles sont à chaque fois disposées de telle sorte qu'elles s'appliquent de plus en plus sur les nervures associées (14) au fur et à mesure de l'augmentation de la pression différentielle (Δp) et amoindrissent en continu les ouvertures (18).

4. Limiteur de débit (1) selon la revendication 3, **caractérisé en ce que** les langues de ressort (19) sont fixées sur une région de bord extérieure du support (10).

5. Limiteur de débit (1) selon la revendication 3, **caractérisé en ce que** les langues de ressort (17) sont fixées au centre (Z) du support (10).

6. Limiteur de débit (1) selon l'une quelconque des revendications 1 à 5, **caractérisé en ce que** la langue de ressort (17) est disposée au-dessus des ouvertures (13, 18) de telle sorte qu'elle s'applique aussi de plus en plus sur les régions latérales bordant les ouvertures (13, 18) au fur et à mesure de l'augmentation de la pression différentielle (Δp).

7. Limiteur de débit (1) selon l'une quelconque des revendications 1 à 6, **caractérisé en ce que** le support (10) est configuré sous forme de disque circulaire qui comprend sur la région de bord extérieure un rebord droit (15) pour l'insertion dans une conduite tubulaire.

8. Limiteur de débit (1) selon la revendication 7, **caractérisé en ce qu'**une partie du rebord (15) est recourbée sur le disque et serre le ressort de forme plate (11) sur le support (10).

9. Procédé pour limiter un flux volumique à travers une conduite de liquide (2), comprenant :
le montage d'un ressort de forme plate cintré (11) sur un support (10) avec un passage, le ressort de forme plate (11) étant prévu pour s'aplatir de plus en plus au fur et à mesure de l'augmentation de la pression différentielle (Δp), le ressort de forme plate (11) étant pourvu d'au moins une langue de ressort (12, 17, 19),
**caractérisé en ce que**
le passage est pourvu d'au moins deux ouvertures juxtaposées (13, 18), la langue de ressort (12, 17, 19) et les ouvertures (13, 18) étant configurées à chaque fois le long d'une direction longitudinale avec une étendue essentiellement identique, et
**en ce que** le support (10) comprend au moins une nervure (14) qui sépare l'une de l'autre à chaque fois deux ouvertures juxtaposées (13, 18) et **en ce que** chaque langue de ressort (12, 19) est configurée et disposée au-dessus des ouvertures (13, 18) de telle sorte qu'elle s'applique de plus en plus sur la nervure (14) au fur et à mesure de l'augmentation de la pression différentielle (Δp) et amoindrisse en continu les ouvertures (13, 18), afin de réduire en continu le passage à l'intérieur d'une plage de pression définie, les ouvertures (18) restant ouvertes dans des plages restantes définies.
